# EUROPEAN PATENT SPECIFICATION

(11) **EP 2 807 913 B1**
(45) Date of publication and mention of the grant of the patent: **13.04.2016**
(21) Application number: 14170512.9
(22) Date of filing: 29.05.2014
(51) Int. Cl.: A01B 73/04, A01D 78/04, A01D 78/06

(54) **Two-comb side-delivery rake having windrowing assemblies with coaxial hinges**
Zweikamm-Seitenablageschwader mit Schwadanordnungen mit koaxialen Scharnieren
Râteau à distribution latérale à deux peignes contenant des ensembles d'andainage avec charnières coaxiales

(30) Priority: 29.05.2013 IT MI20130873
(43) Date of publication of application: 03.12.2014
(73) Proprietor: Repossi Macchine Agricole S.r.l., 27022 Casorate Primo (PV) (IT)
(72) Inventor: Repossi, Gabriele, 27022 Casorate Primo (IT)
(74) Representative: Bernotti, Andrea

(56) References cited:
- EP-A1- 2 384 615
- DE-A1- 2 000 478
- DE-C- 821 139
- GB-A- 1 143 049

## Description

The present invention relates to a two-comb side-delivery rake having windrowing assemblies with coaxial hinges.

As it is known, side-delivery rakes are used in agriculture for moving forage after thrashing and for collecting the processed material in aisles, usually called windrows.

The side-delivery rakes most commonly used are of the rotary or comb type.

Rotary side-delivery rakes use a plurality of rakes mounted on one or more wheels arranged substantially horizontal while in use.

Comb side-delivery rakes are provided with one or more windrowing assemblies, each one comprising combs movable in substantially vertical planes operated by pairs of rotating discs, to which the ends of the combs are connected.

A common problem to both types of side-delivery rakes is the disadvantaged ratio between the size in working configuration and in road transport configuration and in maneuverability. Often, the rules impose a maximum size with respect to the towing vehicle for use on the road without restrictions, while otherwise it is mandatory to arrange for special transport, for example with support means equipped with warning devices preceding and following the agricultural vehicle. To avoid such situations, sometimes larger than necessary transport means or, alternatively, more compact side-delivery rakes are used. In both cases, however, there are disadvantages in terms of costs and consumption. A side-delivery rake of lesser spread, in fact, requires a greater number of rows to process a given area and therefore work time and traveled distances are greater.

In known side-delivery rakes, furthermore, the structure and arrangement of the windrowing assemblies one with respect to the other may create difficulties when the side-delivery rakes themselves must be conducted along unstraight paths in the working configuration (for example, when it is necessary to reverse the travelling direction in the vicinity of a land boundary to be processed). The distance between the windrowing assemblies imposes rather large curve radii for the vehicle driving or pushing the side-delivery rake. If the radius of the curve is too tight, in fact, the forage can not be treated properly because windrowing assemblies do not operate in a coordinated manner. For example, part of the forage can be left on the ground instead of being properly collected in a side windrow or, in the inverse operation, remain partially piled instead of being spread evenly.

A known side-delivery rake is for example described in EP-A1-2384615. In this case, a side-delivery rake comprises a frame, connectable to an automotive vehicle, and two windrowing assemblies of comb type carried by the frame. The windrowing assemblies are rotatable with respect to the frame transverse to the travelling direction between the respective working and transport positions. The windrowing assemblies are lowered in the working positions and lifted in the transport positions.

Purpose of the present invention is therefore to provide a side-delivery rake of compact structure that has a wide working spread and is easily transportable on the road.

According to the present invention, a side-delivery rake as defined in claim 1 is provided.

The present invention will now be described with reference to the accompanying drawings, which illustrate a non-limiting embodiment, wherein:
- Figure 1 is a front perspective view from above of three quarters of a side-delivery rake according to one embodiment of the present invention;
- Figure 2 is a rear perspective view of three quarters angle of the side-delivery rake of Figure 1, with parts removed;
- Figure 3 is a top plan view of the side-delivery rake of Figure 1, with parts removed;
- Figure 4 is a top plan view of the side-delivery rake of Figure 1, with parts removed;
- Figure 5 is a top plan view of a detail of the side-delivery rake of Figure 1, sectioned along the plane VV of figure 4;
- Figure 6 is a top plan view of the side-delivery rake of Figure 1 coupled to an automotive vehicle in a working configuration;
- Figure 7 is a side view of the side-delivery rake of Figure 1 coupled to an automotive vehicle in a configuration of road transport; and
- Figure 8 is a schematic view showing the relative position of details of the side-delivery rake in the configuration of Figure 6.

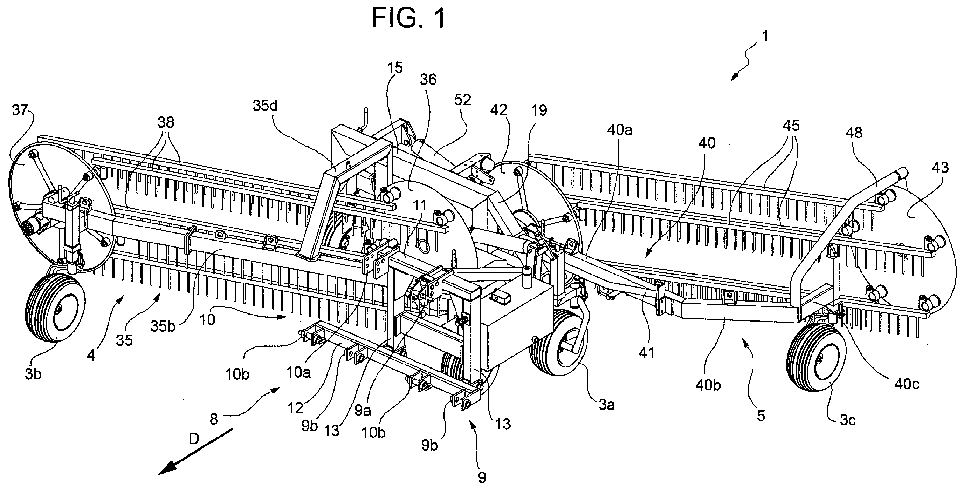

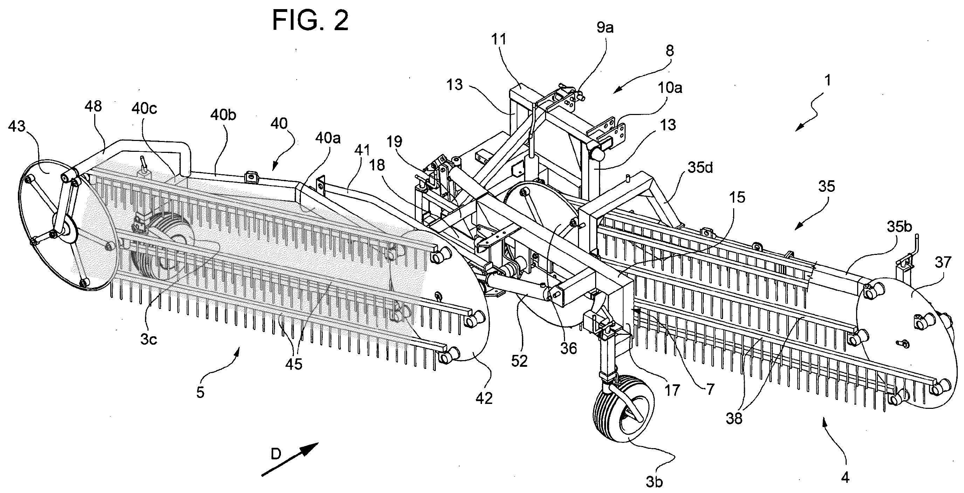

With reference to Figures 1 to 3, a side-delivery rake, indicated in its entirety with the number 1, comprises a frame 2, a first windrowing assembly 4 and a second windrowing assembly 5.

The frame 2 comprises a longitudinal bar 6 and a bridge-type supporting structure 7. Furthermore, the frame 2 is supported by three wheels 3a, respectively connected to the longitudinal bar 6 and to opposite ends of the supporting structure 7. Preferably, the wheels 3a are provided with height adjustment mechanisms, not shown here for simplicity.

The longitudinal bar 6 is parallel to a travelling direction D of the side-delivery rake 1 (at least when the side-delivery rake 1 is conducted along a substantially straight path) and has at one end a connecting structure 8 provided with a first three-point hitch 9 and a second three-point hitch 10.

Since, as will be further explained, the side-delivery rake 1 may be connected to both the front and the back of an automotive vehicle (for example, a tractor), the travelling direction D will indicate here and in the following a line and will not consider orientation, unless otherwise specified. In addition, it is understood to refer to the direction D when the side-delivery rake 1 is conducted along a substantially straight path.

The connection structure 8 is fixed to the longitudinal bar 6 and comprises a top crossbar 11 and a bottom crossbar 12, connected to each other by uprights 13.

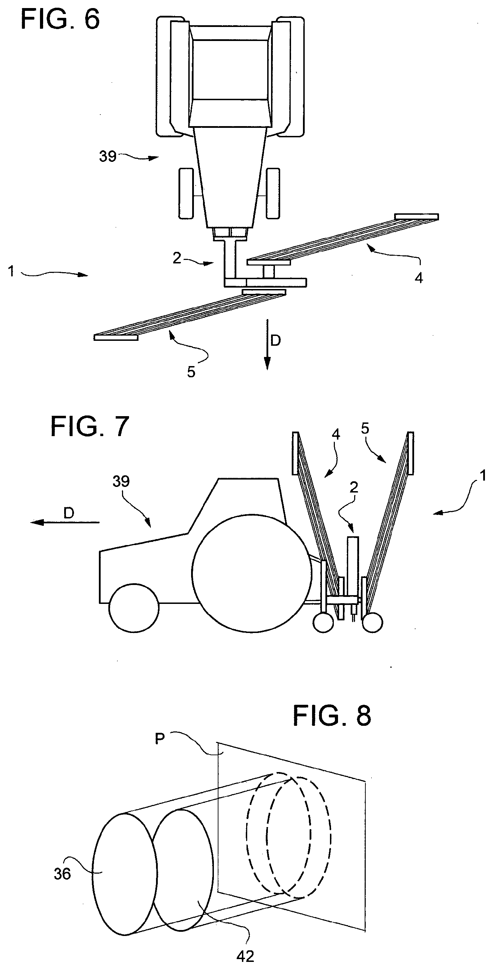

The first three-point hitch 9 and the second three-point hitch 10 are offset perpendicularly with respect to the travelling direction D. In one embodiment, in particular, the first three-point hitch 9 and the second three-point hitch 10 have their respective top hitch points 9a, 10a on the upper cross bar 11 and the respective bottom hitch points 9b, 10b on the bottom crossbar 12. Moreover, the first three-point hitch 9 and the second three-point hitch 10 are configured for front connection to a vehicle in a first configuration (figure 6) and for back connection to the automotive vehicle in a second configuration (figure 7), so that the frame 2 is pushed by the automotive vehicle in the first configuration and carried by the transport means in the second configuration.

The supporting structure 7 extends crosswise to the travelling direction D, and rotatably supports the first assembly 4 and the second windrowing assembly 5. In one embodiment, in particular, the support structure comprises a cross member 15, horizontal and perpendicular to the travelling direction D, a first upright 16 and a second upright 17. The first upright 16 is connected to the longitudinal bar 6 by a connecting bar 18 and a transverse connecting bar 19, with which the first upright 16 form a triangle. The longitudinal bar 6 is therefore arranged laterally with respect to the supporting structure 7.

The first assembly 4 and the second windrowing assembly 5 are hinged to the frame 2 and are rotatable about a common axis of rotation A. Compared to the travelling direction D, the supporting structure 7 is arranged between the first assembly 4 and the second windrowing assembly 5.

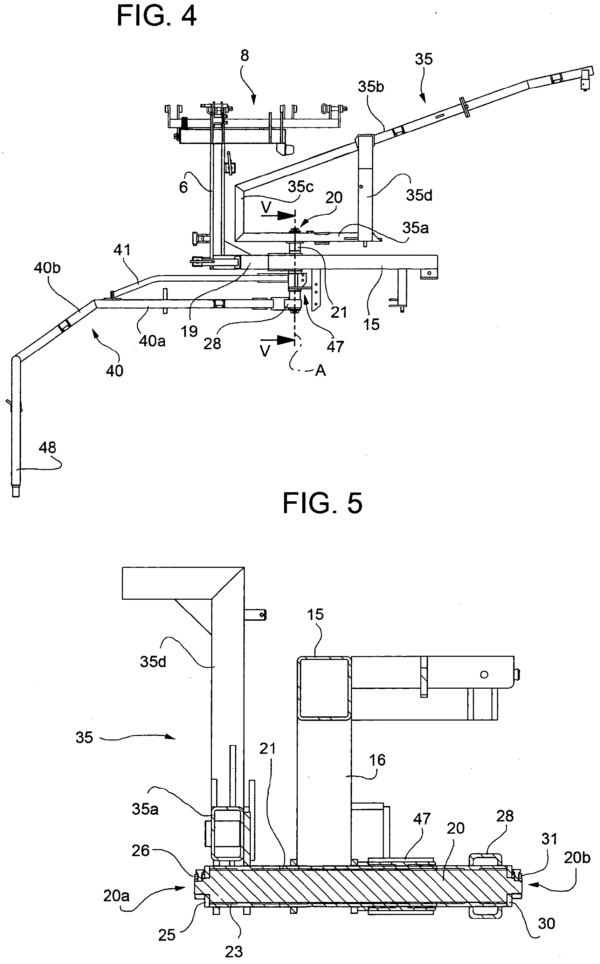

In one embodiment, the windrowing assemblies 4, 5 are connected to the supporting structure 7 by a hinge pin 20, as shown in detail in Figures 4 and 5.

The hinge pin 20 is inserted within a rotatable sleeve 21, which is fixed to the supporting structure 7, in particular at the side of the first upright 16, under the crossbar 15. In one embodiment, the sleeve 21 is welded to plates that extend horizontally from the connecting bar 18 as an extension of the same. The sleeve 21 and the hinge pin 20 extend along an axis of rotation A parallel to the travelling direction D and protrude in the front and in the back with respect to the supporting structure 7. In an alternative embodiment, not shown, the hinge pin is rigidly fixed to the frame 2, with the ends that protrude in the front and in the back with respect to the supporting structure.

With reference again to Figures 1 to 3, the first assembly 4 and the second windrowing assembly 5 are rotatably coupled to respective ends of the hinge pin 20. In particular, the first windrowing assembly 4 is provided with a sleeve 23 fitted onto a first end 20a of the hinge pin 20. A washer 25 and a nut 26 prevent the slippage of the sleeve 23 from the hinge pin 20, without hindering the relative rotation. The second windrowing assembly 5 is provided with a sleeve 28 fitted on a second end 20b of the hinge pin 20, opposite to the first end 20b. Even in this case, a washer 30 and a nut 31 prevent the slippage of the sleeve 28 from the hinge pin 20, without hindering the relative rotation.

The first windrowing assembly 4 comprises a support bar 35, an inner disk 36, an outer disk 37 and a plurality of combs 38 (for example five). A first portion of the first windrowing assembly 4 is comprised longitudinally between the supporting structure 7 and the three point attachments 9, 10 and is arranged laterally to the longitudinal bar 6. A second portion of the first windrowing assembly 4 protrudes however with respect to the three point attachments in the travelling direction D of the side-delivery rake 1.

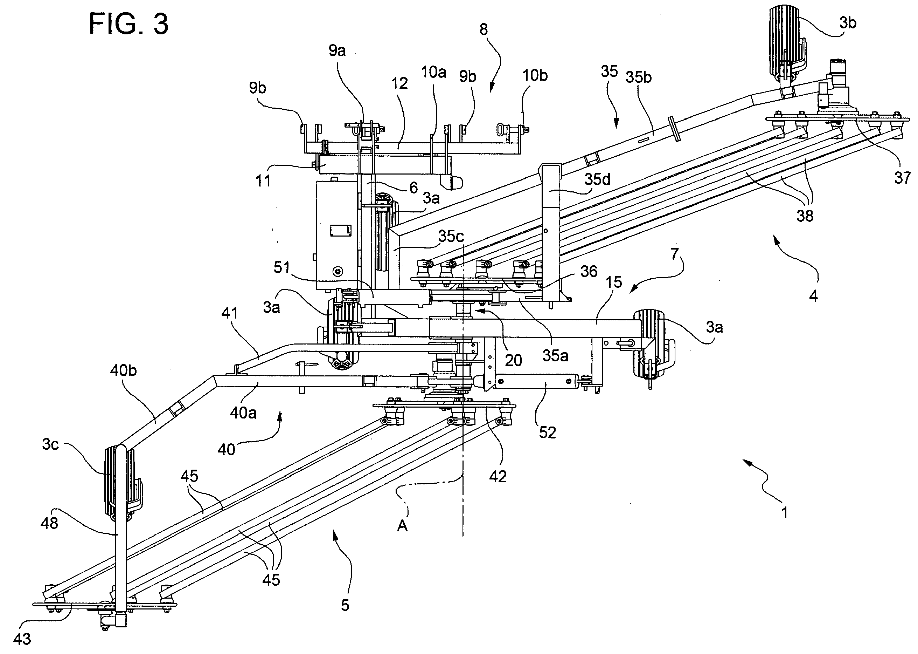

More in detail, the support bar 35 has a first portion 35a which extends perpendicularly to the direction D and substantially parallel to the supporting structure 7. The sleeve 23, with which the first windrowing assembly is coupled to the hinge pin 20, is fixed to the first portion 35a of the support bar 35, as shown in Figure 5. A second portion 35b of the support bar 35 (figure 3) extends outward transversely with respect to the travelling direction D of the side-delivery rake 1 and, consequently, relative to the axis of rotation A of the windrowing assemblies 4, 5. An outer end of the second portion 35b of the support bar 35 protrudes with respect to the three point attachments 9, 10 in the travelling direction D. The first portion 35a and the second portion 35b of the support bar 35 are joined together by a connecting portion 35c and a reinforcement portion 35d, arc-shaped for the housing of the combs 38. A wheel 3b is coupled to the outer end of the support bar 35.

A hydraulic cylinder 51 is connected to the frame 2 and the support bar 35 and is actuated by a hydraulic unit (not shown) to rotate the first windrowing assembly 4 between a working position, in which the first windrowing assembly 4 is lowered, and one, in which the first windrowing assembly 4 is lifted. As shown in Figure 6, given that the first windrowing assembly 4 protrudes with respect to the three point attachments 9, 10 in the travelling direction D, in the transport position the first windrowing assembly 4 extends partially above an automotive vehicle to which the side-delivery rake 1 is connected (for example a tractor 39, illustrated only schematically in Figure 7).

The inner disk 36 is carried by the first portion 35a of the support bar 35 in the vicinity of the hinge pin 20, laterally towards the outside. The outer disk 37 is instead carried by the support bar 35 at its outer end.

The inner disk 36 and the outer disk 37 are parallel and have respective axes of rotation parallel to the travelling direction D of the side-delivery rake 1. Moreover, the outer disk 37 is offset with respect to the inner disk 36 in the travelling direction D and protrudes, in the same direction, with respect to the three point attachments 9, 10 from the part of the automotive vehicle.

Each of the combs 38 comprises a horizontal bar having opposite ends respectively connected to the inner disk 36 and the outer disk 37, and a plurality of vertical teeth.

The second windrowing assembly 5 comprises a support bar 40, a reinforcing arm 41, an inner disk 42, an outer disk 43 and a plurality of combs 45.

The support bar 40 carries at one end the sleeve 28, through which the support bar 40 itself is coupled to the hinge pin 20. The support bar 40 has a first portion 40a which extends perpendicularly to the travelling direction D of the side-delivery rake 1 and is substantially parallel to the supporting structure 7. A second portion 40b and a third portion 40c of the support bar 40 respectively extend transversely and parallel with respect to the travelling direction D. A wheel 3c is connected to the end of the third portion 40c of the support bar 40.

The reinforcing arm 41 extends along the first portion 40a of the support bar 40, to which is attached with one end. An opposite end of the reinforcing arm 41 is provided with a slot 47 fit over the sleeve 21 of the hinge pin 20 (see also Figure 5). The reinforcing arm 41 is thus rotatable about the axis of rotation A with the support bar 40. The support bar 40 and the reinforcing arm 41 rotatably support the inner disk 42 in the vicinity of the hinge pin 20.

An appendix 48, which extends along the travelling direction D, surmounts the third portion 40c of the support bar 40 and the wheel 3c and carries at its end the outer disk 43.

A hydraulic cylinder 52 is connected to the frame 2 and the support bar 40 of the second windrowing assembly 5 and is actuated by the hydraulic control unit (not shown) to rotate the second windrowing assembly 5 between a working position, in which the second windrowing assembly 5 is lowered, and a transport position, wherein the second windrowing assembly 5 is raised.

Each of the combs 45 comprises a horizontal bar having opposite ends respectively connected to the inner disk 42 and the outer disk 43, and a plurality of vertical teeth. The inner disk 42 and the outer disk 43 are parallel and have respective axes of rotation parallel to the travelling direction D of the side-delivery rake 1. The outer disk 43 is offset with respect to the inner disk 47 in the travelling direction D, so that, in working configuration, the combs 45 of the second windrowing assembly 5 are substantially parallel to the combs 38 of the first windrowing assembly 4 and arranged in opposite directions.

In addition (Figure 6), the inner disk 36 of the first windrowing assembly 4 and the inner disk 42 of the second windrowing assembly 5 are arranged so that substantially all of the forage moved by the more advanced windrowing assembly 4, 5 is collected from the rearward windrowing assembly 4, 5 and moved to form a single side windrow. In particular, the inner disk 36 of the first windrowing assembly 4 and the inner disk 42 of the second windrowing assembly 5 are arranged so that their projections along the travelling direction D on a plane P perpendicular to the travelling direction D itself are at least partially overlapping (as shown schematically in Figure 8).

The coaxial connection of the windrowing assemblies 4, 5 to the frame 2 advantageously allows to obtain a simple and compact structure and a modest longitudinal dimension of the side-delivery rake 1, facilitating as well also the transportation on the road. More precisely, the coaxial connection allows the use of a single hinge pin and a single support (defined in the example described by the sleeve 21 and by the plates which extend from the connecting bar 18), with the windrowing assemblies 4, 5 arranged in the immediate vicinity of the cross member 15 and close to each other with respect to the travelling direction D. Axes of distinct rotation would not allow to maintain the windrowing assemblies only slightly staggered relative to one another, for the difficulty in achieving supports for the hinge pins necessarily separated, but very close. It would therefore be necessary to space them significantly between the hinge axes, sacrificing the work width of the opening and the overlapping of the inner disks, and/or space the supports of the hinge pins in the travelling direction. The reduced longitudinal dimensions, in particular, allow the use of small public transport means even for side-delivery rakes of considerable dimensions without violating traffic rules.

To further reduce the overall dimensions contributes to the fact that, when the side-delivery rake is connected to the tractor in the transport configuration of the road, the first windrowing assembly extends partially above the tractor itself. Consequently, the overall dimensions of the assembly tractor-rake in the travelling direction D is in fact decreased.

The invention thus allows to combine a satisfactory work width of the opening with a compact structure and a very contained transversal bulk on the road.

With the windrowing assemblies connected rotatable about the same axis, the interior disks and the combs can be arranged in order to allow a more effective displacement of forage, particularly when the side-delivery rake works along paths that are not straight. In particular, the windrows are properly formed (or, vice versa, the forage is spread evenly from side windrows already formed) even when the side-delivery rake faces changes of direction in relatively restricted spaces, for example to reverse the travelling direction, near the border of a land to be worked. The side-delivery rake is thus more maneuverable and flexible to use.

The two staggered three-point attachments also allow the connection of the tractor to the side-delivery rake in the most appropriate way according to the conditions. In particular, the first three-point attachment can advantageously be exploited during processing, while the second, more central three-point attachment can be used for road transport to further reduce the transverse dimensions (practically, one can prevent the side-delivery rake from protruding laterally with respect to the tractor).

In working configuration, the side-delivery rake is forwardly carried by the tractor. Advantageously, therefore, the forage is moved from the side-delivery rake 1 before the passage of the tractor. Trampling is thus avoided, which in any case is damaging, and is particularly harmful in the case of some types of particularly delicate forage, such as, for example, alfalfa. Safety problems are also resolved. In fact, neither the wheels of the tractor, nor the wheels of the side-delivery rake pass upon the forage, which is slippery and can represent a serious danger if the ground is sloped.

Finally, it is evident that to the side-delivery rake described modifications and variations can be made, without departing from the scope of the present invention, as defined in the appended claims.

## Claims

1. Side-delivery rake comprising:
a frame (2), connectable to an automotive vehicle (39) for transport in a travelling direction (D);
a comb-type first windrowing assembly (4) and a second windrowing assembly (5), which are fitted to the frame (2) and movable angularly, with respect to the frame (2) and crosswise to the travelling direction (D) between respective working positions, in which the first windrowing assembly (4) and the second windrowing assembly (5) are lowered, and respective transport positions, in which the first windrowing assembly (4) and the second windrowing assembly (5) are lifted;
**characterized in that** the first windrowing assembly (4) and the second windrowing assembly (5) are hinged to the frame (2) and rotatable about a common rotation axis (A).

2. The side-delivery rake according to claim 1, wherein:
the frame (2) comprises a supporting structure (7), transverse with respect to the travelling direction (D);
the first windrowing assembly (4) and the second windrowing assembly (5) are connected to the supporting structure (7); and
the supporting structure (7) is arranged between the first windrowing assembly (4) and the second windrowing assembly (5) with respect to the travelling direction (D).

3. The side-delivery rake according to claim 2, comprising a first pin member (20a) and a second pin member (20b) which are connected to the supporting structure (7) and extend in opposite directions to each other along the rotation axis (A); and wherein the first windrowing assembly (4) and the second windrowing assembly (5) are coupled to the first pin member (20a) and the second pin member (20b) respectively so as to be rotatable with respect to the frame (2).

4. The side-delivery rake according to claim 3, comprising a hinge pin (20), connected to the supporting structure (7) parallel to the travelling direction (D); and wherein a first end and a second end of the hinge pin (20) form the first pin member (20a) and the second pin member (20b) respectively.

5. The side-delivery rake according to claim 4, wherein the hinge pin (20) is fitted in rotary manner to the supporting structure (7).

6. The side-delivery rake according to claim 4 or 5, wherein the frame (2) comprises a sleeve (21), fixed to the supporting structure (7) and parallel to the travelling direction (D), and wherein the hinge pin (20) is inserted rotatable in the sleeve (21).

7. The side-delivery rake according to any of claims 3 to 6, wherein the first windrowing assembly (4) and the second windrowing assembly (5) comprise a first support bar (35) and a second support bar (40) respectively and wherein the first support bar (35) and the second support bar (40) have respective coupling portions (35a, 40a) fitted rotatable to the first pin member (20a) and the second pin member (20b ) respectively.

8. The side-delivery rake according to any one of the preceding claims, comprising hitch means (8), configured for front connection to an automotive vehicle (39) in a first configuration and for rear connection to the automotive vehicle (39) in a second configuration, so that the frame (2) is pushed by the automotive vehicle (39) in the first configuration and is carried by the automotive vehicle in the second configuration.

9. The side-delivery rake according to claim 8, wherein the hitch means (8) comprise a first three-point hitch (9) and a second three-point hitch (10) offset perpendicularly to the travelling direction (D).

10. The side-delivery rake according to claim 8 dependent on claim 2, wherein:
the frame (2) comprises a longitudinal bar (6), parallel to the travelling direction (D) and connected to the supporting structure (7);
the hitch means (8) comprise a top crossbar (11) and a bottom crossbar (12), both connected rigidly to the longitudinal bar (6); and
the first three-point hitch (9) and the second three-point hitch (10) have respective top hitch points (9a, 10a) on the top crossbar (11) and respective bottom hitch points (9b, 10b) on the bottom crossbar (12).

11. The side-delivery rake according to any of claims 8 to 10, wherein the first windrowing assembly (4) has a first portion arranged between the bearing structure (7) and the hitch means (8) and a second portion projecting with respect to the hitch means (8) in the travelling direction (D).

12. The side-delivery rake according to any one of the preceding claims, wherein, in the respective working positions, first combs (38) of the first windrowing assembly (4) and second combs (45) of the second windrowing assembly (5) are substantially parallel to one another and transverse with respect to the travelling direction (D), and the first windrowing assembly (4) and the second windrowing assembly (5) are arranged so that, in use, forage displaced by the second windrowing assembly (5) is gathered and displaced further by the first windrowing assembly (4) to form a single side windrow.

13. The side-delivery rake according to any one of the preceding claims, wherein the first windrowing assembly (4) and the second windrowing assembly (5) comprise respective inner disks (36, 42) and respective outer disks (37, 43) and wherein the inner disk (36) of the first windrowing assembly (4) and the inner disk (42) of the second windrowing assembly (5) are arranged so that, when the first windrowing assembly (4) and the second windrowing assembly (5) are in their respective working positions, projections, in the travelling direction (D) of the inner disk (36) of the first windrowing assembly (4) and of the inner disk (42) of the second windrowing assembly (5) at least partially overlap.

14. An agricultural machine comprising an automotive vehicle (39) and a side-delivery rake (1) according to any one of the preceding claims coupled to the front of the automotive vehicle (39).

## Patentansprüche

1. Seitenablageschwader, mit:
einem Rahmen (2), der mit einem Kraftfahrzeug (43) für einen Transport in einer Fahrtrichtung (D) verbindbar ist;
einer ersten Schwadeinheit (4) und einer zweiten Schwadeinheit (5) eines Kammtyps, die am Rahmen (2) befestigt und bezüglich des Rahmens (2) und quer zur Fahrtrichtung im Winkel beweglich sind zwischen jeweiligen Arbeitspositionen, in denen die erste Schwadeinheit (4) und die zweite Schwadeinheit (5) abgesenkt sind, und jeweiligen Transportpositionen, in denen die erste Schwadeinheit (4) und die zweite Schwadeinheit (5) angehoben sind;
**dadurch gekennzeichnet, dass**
die erste Schwadeinheit (4) und die zweite Schwadeinheit (5) am Rahmen (2) gelenkig befestigt und um eine gemeinsame Achse (A) drehbar sind.

2. Seitenablageschwader nach Anspruch 1, wobei
der Rahmen (2) eine sich quer zur Fahrtrichtung (D) erstreckende Haltestruktur (7) aufweist,
die erste Schwadeinheit (4) und die zweite Schwadeinheit (5) mit der Haltestruktur (7) verbunden sind, und
die Haltestruktur (7) bezüglich der Fahrtrichtung (D) zwischen der ersten Schwadeinheit (4) und der zweiten Schwadeinheit (5) angeordnet ist.

3. Seitenablageschwader nach Anspruch 2, mit einem ersten Bolzenelement (20a) und einem zweiten Bolzenelement (20b), die mit der Haltestruktur (7) verbunden sind und sich entlang der Drehachse (A) in entgegengesetzte Richtungen erstrecken, wobei die erste Schwadeinheit (4) und die zweite Schwadeinheit (5) mit dem ersten Bolzenelement (20a) bzw. mit dem zweiten Bolzenelement (20b) derart verbunden sind, dass sie bezüglich des Rahmens (2) drehbar sind.

4. Seitenablageschwader nach Anspruch 3, mit einem Gelenkbolzen (20), der parallel zur Fahrtrichtung (D) mit der Haltestruktur (7) verbunden ist, wobei ein erstes Ende und ein zweites Ende des Gelenkbolzens (20) das erste Bolzenelement (20a) bzw. das zweite Bolzenelement (20b) bilden.

5. Seitenablageschwader nach Anspruch 4, wobei der Gelenkbolzen (20) auf eine drehbare Weise an der Haltestruktur (7) befestigt ist.

6. Seitenablageschwader nach Anspruch 4 oder 5, wobei der Rahmen (2) eine Buchse (21) aufweist, die an der Haltestruktur (7) befestigt ist und sich parallel zur Fahrtrichtung (D) erstreckt, und wobei der Gelenkbolzen (20) in die Buchse (21) drehbar eingesetzt ist.

7. Seitenablageschwader nach einem der Ansprüche 3 bis 6, wobei die erste Schwadeinheit (4) und die zweite Schwadeinheit (5) eine erste Haltestange (35) bzw. eine zweite Haltestange (40) aufweisen, und wobei die erste Haltestange (35) und die zweite Haltestange (40) jeweilige Kupplungsabschnitte (35a, 40a) aufweisen, die am ersten Bolzenelement (20a) bzw. am zweiten Bolzenelement (20b) drehbar befestigt sind.

8. Seitenablageschwader nach einem der vorangehenden Ansprüche, ferner mit einer Ankupplungsvorrichtung (8), die dafür konfiguriert ist, in einer ersten Konfiguration mit einer Vorderseite eines Kraftfahrzeugs (39) und in einer zweiten Konfiguration mit einer Rückseite des Kraftfahrzeugs (39) verbunden zu werden, so dass der Rahmen (2) in der ersten Konfiguration durch das Kraftfahrzeug (39) gedrückt und in der zweiten Konfiguration durch das Kraftfahrzeug (39) getragen wird,

9. Seitenablageschwader nach Anspruch 8, wobei die Ankupplungsvorrichtung (8) eine erste Dreipunktankupplungsvorrichtung (9) und eine senkrecht zur Fahrtrichtung (D) versetzte zweite Dreipunktankupplungsvorrichtung (10) aufweist.

10. Seitenablageschwader nach Anspruch 8 in Abhängigkeit von Anspruch 2, wobei
der Rahmen (2) eine Längsstange (6) aufweist, die sich parallel zur Fahrtrichtung (D) erstreckt und mit der Haltestruktur (7) verbunden ist,
die Ankupplungsvorrichtung (8) einen oberen Querträger (11) und einen unteren Querträger (12) aufweist, die beide mit der Längsstange (6) starr verbunden sind, und
die erste Dreipunktankupplungsvorrichtung (9) und die zweite Dreipunktankupplungsvorrichtung (10) jeweilige obere Ankupplungspunkte (9a, 10a) auf dem oberen Querträger (11) und jeweilige untere Ankupplungspunkte (9b, 10b) auf dem unteren Querträger (12) aufweisen.

11. Seitenablageschwader nach einem der Ansprüche 8 bis 10, wobei die erste Schwadeinheit (4) einen zwischen der Lagerstruktur (7) und der Ankupplungsvorrichtung (8) angeordneten ersten Abschnitt und einen bezüglich der Ankupplungsvorrichtung (8) in die Fahrtrichtung (D) hervorstehenden zweiten Abschnitt aufweist.

12. Seitenablageschwader nach einem der vorangehenden Ansprüche, wobei in den jeweiligen Arbeitspositionen erste Kämme (38) der ersten Schwadeinheit (4) und zweite Kämme (45) der zweiten Schwadeinheit (5) sich im Wesentlichen parallel zueinander und quer zur Fahrtrichtung (D) erstrecken, und wobei die erste Schwadeinheit (4) und die zweite Schwadeinheit (5) derart angeordnet sind, dass im Betrieb durch die zweite Schwadeinheit (5) versetztes Viehfutter durch die erste Schwadeinheit (4) erfasst und weiter versetzt wird, um eine einzelne Seitenschwade zu bilden.

13. Seitenablageschwader nach einem der vorangehenden Ansprüche, wobei die erste Schwadeinheit (4) und die zweite Schwadeinheit (5) jeweils eine Innenscheibe (36, 42) und eine Außenscheibe (37, 43) aufweisen, und wobei die Innenscheibe (36) der ersten Schwadeinheit (4) und die Innenscheibe (42) der zweiten Schwadeinheit (5) derart angeordnet sind, dass, wenn die erste Schwadeinheit (4) und die zweite Schwadeinheit (5) sich in ihren jeweiligen Arbeitsposition befinden, sich Projektionen der Innenscheibe (36) der ersten Schwadeinheit (4) und der Innenscheibe (42) der zweiten Schwadeinheit (5) in der Fahrtrichtung (D) mindestens teilweise überlappen.

14. Landmaschine mit einem Kraftfahrzeug (39) und einem mit der Vorderseite des Kraftfahrzeugs (39) verbundenen Seitenablageschwader (1) nach einem der vorangehenden Ansprüche.

## Revendications

1. Râteau à distribution latérale comprenant :
un cadre (2), pouvant être relié à un véhicule automobile (39) pour un transport dans une direction de déplacement (D) ;
un premier ensemble d'andainage de type peigne (4) et un second ensemble d'andainage (5), qui sont montés sur le cadre (2) et angulairement mobiles, par rapport au cadre (2) et transversalement à la direction de déplacement (D) entre des positions de travail respectives, dans lesquelles le premier ensemble d'andainage (4) et le second ensemble d'andainage (5) sont abaissés, et des positions de transport respectives, dans lesquelles le premier ensemble d'andainage (4) et le second ensemble d'andainage (5) sont levés ;
**caractérisé en ce que** le premier ensemble d'andainage (4) et le second ensemble d'andainage (5) s'articulent sur le cadre (2) et peuvent tourner autour d'un axe de rotation (A) commun.

2. Râteau à distribution latérale selon la revendication 1, dans lequel :
le cadre (2) comprend une structure de support (7), transversale par rapport à la direction de déplacement (D) ;
le premier ensemble d'andainage (4) et le second ensemble d'andainage (5) sont reliés à la structure de support (7) ; et
la structure de support (7) est agencée entre le premier ensemble d'andainage (4) et le second ensemble d'andainage (5) par rapport à la direction de déplacement (D).

3. Râteau à distribution latérale selon la revendication 2, comprenant un premier élément broche (20a) et un second élément broche (20b) qui sont reliés à la structure de support (7) et s'étendent dans des directions opposées l'une à l'autre le long de l'axe de rotation (A) ; et dans lequel le premier ensemble d'andainage (4) et le second ensemble d'andainage (5) sont accouplés respectivement au premier élément broche (20a) et au second élément broche (20b) de manière à pouvoir tourner par rapport au cadre (2).

4. Râteau à distribution latérale selon la revendication 3, comprenant une broche d'articulation (20), reliée à la structure de support (7) parallèlement à la direction de déplacement (D) ; et dans lequel une première extrémité et une seconde extrémité de la broche d'articulation (20) forment le premier élément broche (20a) et le second élément broche (20b) respectivement.

5. Râteau à distribution latérale selon la revendication 4, dans lequel la broche d'articulation (20) est montée de manière rotative sur la structure de support (7).

6. Râteau à distribution latérale selon la revendication 4 ou 5, dans lequel le cadre (2) comprend un manchon (21), fixé à la structure de support (7) et parallèle à la direction de déplacement (D), et dans lequel la broche d'articulation (20) est insérée de manière rotative dans le manchon (21).

7. Râteau à distribution latérale selon l'une quelconque des revendications 3 à 6, dans lequel le premier ensemble d'andainage (4) et le second ensemble d'andainage (5) comprennent une première barre de support (35) et une seconde barre de support (40) respectivement et dans lequel la première barre de support (35) et la seconde barre de support (40) ont des parties d'accouplement (35a, 40a) respectives montées de manière rotative sur le premier élément broche (20a) et le second élément broche (20b) respectivement.

8. Râteau à distribution latérale selon l'une quelconque des revendications précédentes, comprenant un moyen d'attelage (8), configuré en vue d'une liaison avant à un véhicule automobile (39) dans une première configuration et en vue d'une liaison arrière au véhicule automobile (39) dans une seconde configuration, de sorte que le cadre (2) soit poussé par le véhicule automobile (39) dans la première configuration et soit porté par le véhicule automobile dans la seconde configuration.

9. Râteau à distribution latérale la revendication 8, dans lequel le moyen d'attelage (8) comprend un premier attelage à trois points (9) et un second attelage à trois points (10) décalés perpendiculairement à la direction de déplacement (D).

10. Râteau à distribution latérale selon la revendication 8 dépendant de la revendication 2, dans lequel :
le cadre (2) comprend une barre longitudinale (6), parallèle à la direction de déplacement (D) et reliée à la structure de support (7) ;
le moyen d'attelage (8) comprend une traverse supérieure (11) et une traverse inférieure (12), toutes les deux reliées de manière rigide à la barre longitudinale (6) ; et
le premier attelage à trois points (9) et le second attelage à trois points (10) ont des points d'attelage supérieurs (9a, 10a) respectifs sur la traverse supérieure (11) et des points d'attelage inférieurs (9b, 10b) respectifs sur la traverse inférieure (12).

11. Râteau à distribution latérale selon l'une quelconque des revendications 8 à 10, dans lequel le premier ensemble d'andainage (4) comporte une première partie agencée entre la structure porteuse (7) et le moyen d'attelage (8) et une seconde partie faisant saillie par rapport au moyen d'attelage (8) dans la direction de déplacement (D).

12. Râteau à distribution latérale selon l'une quelconque des revendications précédentes, dans lequel, dans les positions de travail respectives, es premiers peignes (38) du premier ensemble d'andainage (4) et des seconds peignes (45) du second ensemble d'andainage (5) sont sensiblement parallèles entre eux et transversaux par rapport à la direction de déplacement (D), et le premier ensemble d'andainage (4) et le second ensemble d'andainage (5) sont agencés de sorte que, lors de l'utilisation, le fourrage déplacé par le second ensemble d'andainage (5) soit collecté et déplacé davantage par le premier ensemble d'andainage (4) pour former un andain unilatéral.

13. Râteau à distribution latérale selon l'une quelconque des revendications précédentes, dans lequel le premier ensemble d'andainage (4) et le second ensemble d'andainage (5) comprennent des disques intérieurs (36, 42) respectifs et des disques extérieurs (37, 43) respectifs et dans lequel le disque intérieur (36) du premier ensemble d'andainage (4) et le disque intérieur (42) du second ensemble d'andainage (5) sont agencés de sorte que, lorsque le premier ensemble d'andainage (4) et le second ensemble d'andainage (5) se trouvent dans leurs positions de travail respectives, des saillies, dans la direction de déplacement (D) du disque intérieur (36) du premier ensemble d'andainage (4) et du disque intérieur (42) du second ensemble d'andainage (5) se chevauchent au moins partiellement.

14. Machine agricole comprenant un véhicule automobile (39) et un râteau à distribution latérale (1) selon l'une quelconque des revendications précédentes accouplé à l'avant du véhicule automobile (39) .
